# EUROPEAN PATENT APPLICATION

(11) **EP 4 707 095 A1**
(43) Date of publication of application: **11.03.2026**
(21) Application number: 24199360.9
(22) Date of filing: 10.09.2024
(51) Int. Cl.: B60T 17/22, B60T 8/88

(54) **REDUNDANT POWER SUPPLY SYSTEM FOR ELECTRO-MECHANIC BRAKE SYSTEMS IN A VEHICLE**

(71) Applicant: KB Intellectual Property GmbH & Co. KG, 82049 Pullach (DE)
(72) Inventor: MESZAROS, Nora, 9721 Gencsapáti (HU); NEMETH, Huba, 1116 Budapest (HU); LINDNER, Peter, 2300 Ráckeve (HU); TOTH, Zoltan, 1046 Budapest (HU); MOHAMED, Marwa, 80807 München (DE)

(57) **Abstract**

The present invention discloses a solution wherein a redundant power supply system (rPMS) delivers the power required by an electro-mechanical braking system. This is achieved through at least two independent power supply circuits (1), (2), each containing energy storage device modules (11, 12, 18, 19), e.g. batteries, which are supplied from the vehicle's board network. Additionally, the invention introduces a partitioning of the energy storage device modules (11, 12, 18, 19) in each supply path, such that in case of failure in one or two of energy storage device modules there is still adequate power to supply the braking system as well as other safety critical components.

## Description

The present invention relates to an improved redundant power supply for electro-mechanic brake systems in a vehicle, preferably in a commercial vehicle.

With the increasing trend of electrification, Electro-Mechanic Brake Systems (EMBS) come into focus to achieve more precise braking control and faster responses by only using electrical signals and energy medium. Although today in the field of commercial vehicles the pneumatic or hydraulic systems are the most popular solutions, EMBS has several advantages from reduced volume and weight to reduced environmental emission.

These advantages can only be present if the brake system adheres to regulatory standards and certain safety requirements. The power required for the operation of the brake actuators and the control is stored and transmitted from an electric power supply system. Since the malfunction of this supply would result in compromising the braking ability of the vehicle, various levels or numbers of redundancies are required to improve the reliability and availability of the system.

Commercial vehicles with electromechanical transmission braking systems (EMBS) have a potential risk of losing braking functionality and risk of failing to deliver the expected braking performance in case of failure in the board network power source or supply.

Wheel end brake actuators and electronic control unit (ECU) of the EMBS require a stable and sufficient power supply to be able to function properly. Therefore, a redundant power supply (rPMS) is required to fulfil the braking performance satisfying the driver's input or automated driving system's commands.

E.g. from EP 3626505 A1 a system and method for providing redundant electric power is known. It discloses a redundant electric power supply system to at least one vehicle component. It contains at least one power management unit connected to the vehicle power network and one or more storage units where electric energy is stored. A vehicle component is connected to at least two storage units to provide a redundant supply.

Further prior art is known e.g. from WO 2023001770 A1 or EP 4077079 A1.

It is an object of the present invention to provide an improved redundant power supply for electro-mechanic brake systems.

This object is achieved by a system according to the independent claims. Further advantageous developments are subject matters of the dependent claims.

The present invention discloses a solution wherein the redundant power supply system (rPMS) delivers the power required by electro-mechanical braking system. This is achieved through at least two independent power supply circuits each containing energy storage devices (e.g. batteries) which are supplied from the vehicle's board network. Additionally, the invention preferably introduces a partitioning of the energy storage device modules in each supply path, such that in case of failure in one or two of energy storage devices there is still adequate power to supply the braking system as well as other safety critical components.

The system of commercial vehicle with redundant power supply system (rPMS) for electromechanical brake system according to the present invention provides at least two power supply paths supplied from vehicle's board network, where each power supply path contains at least two energy storage device modules interconnected in a H-schematic (2x2 energy storage devices).

Preferably, the two energy storage device modules can be decoupled by safety switches.

The advantage of the smart fuses and switches is the protection. In case of a failure in one of the components (like short circuit etc..) other components or other parts of the circuits can be decoupled and protected. This way partial operation of a circuit can still be ensured and the costs are reduced since not all components have to be replaced if a failure happens.

Additionally, they can measure current and voltage, they are controlled by the ECU, they are faster this way in reaction than the melting fuses, they are better suited for safety relevant applications. The difference between them is not significant. Between two active components (like DC/DC or energy storage) a switch is used and between a load and an energy source a fuse is used.

Preferably, the 2x2 energy storage devices can have different capacities.

Advantageously, the rPMS supplies wheel brake actuators through smart fuses.

Preferably, the system further contains a direct-current-to-direct-current (DCDC) converter to provide power conversion required by the energy storage modules and smart safety switches to protect the power supply path of circuit (1) and to protect the power supply paths of circuit (2) or any further circuits.

Advantageously, the system further contains DCDC converter that performs a charge balancing between upper and lower energy storage modules connected in series in each power paths and smart safety switches are used to disconnect the DCDC converter in case of failure.

In an advantageous development, the energy storage modules supply brake control ECU through a smart fuse. The ECU and the HCU is supplied from the redundant power suppy (rPMS) directly, the redundant foot brake sensor (RFBS) and the redundant trailer control module (RTCM) are supplied through the ECU if they are available.

Preferably, a number of smart safety switches can decouple the DCDC converters, upper batteries, lower batteries from vehicle's board network and from one another in case of failure.

Advantageously, the redundant power supply system contains a normally closed switch to ensure power for the Foot Brake Sensor in an (ignition) OFF state, so that a braking action can be carried out.

By this measure, safety can be significantly enhanced, in particular as a brake pedal movement can trigger a braking event even in the OFF state of the vehicle.

In a further advantageous system of commercial vehicle the redundant power supply system can contain a special configuration in a second circuit (2), which comprises a singular power path, where in the event of failure in circuit (2), the required braking performance is ensured by the front wheel brake actuators.

In the following, the invention is explained in more detail by a preferred embodiment taking into account the appended figures.
Fig. 1 shows a schematic view of two redundant power supply systems for an electromechanical brake system for a commercial vehicle.
Fig. 2 shows a schematic view of a redundant power supply for commercial vehicles.
Fig. 3 shows a schematic view of a redundant power supply system with integrated SF-NC for a redundant foot brake sensor (RFBS).
Fig. 4 shows a schematic view of a redundant power supply system with circuit 2 containing one power supply path.

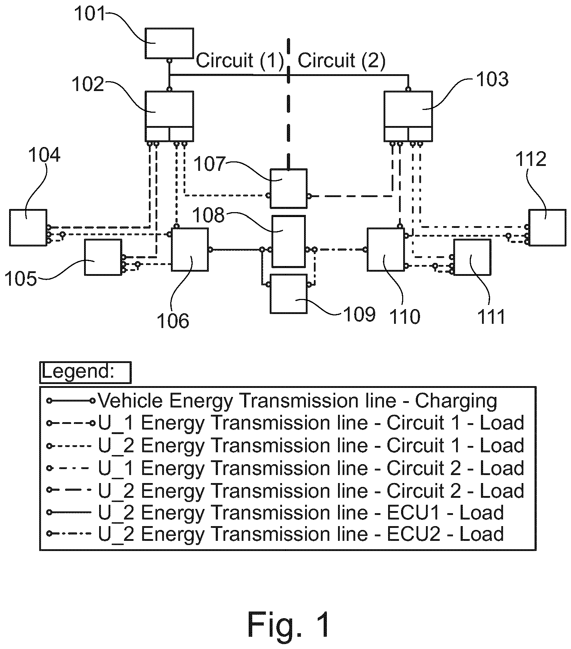

A redundant power supply system architecture of a commercial vehicle is shown in **Fig. 1****.**

In the present embodiment there is a board net 101. The power supply for electromechanical brake system (EMBS) comprises redundant power supply units (rPMS) denoted as 102 and 103 in brake circuit (1) and circuit (2), respectively.

Each rPMS module can supply a redundant hand control unit (RHCU) 107, a redundant foot brake sensor (RFBS) 108 and a redundant trailer control module (RTCM) 109.

Furthermore, the RPMS 102 system in circuit (1) provides power required by the first brake control electronic control unit (ECU) 106 and e.g. the front wheel end actuators 104, 105, and the RPMS 103 system in circuit (2) provides power required by the second brake control electronic control unit (ECU) 106 and e.g. the rear wheel end actuators 111, 112.

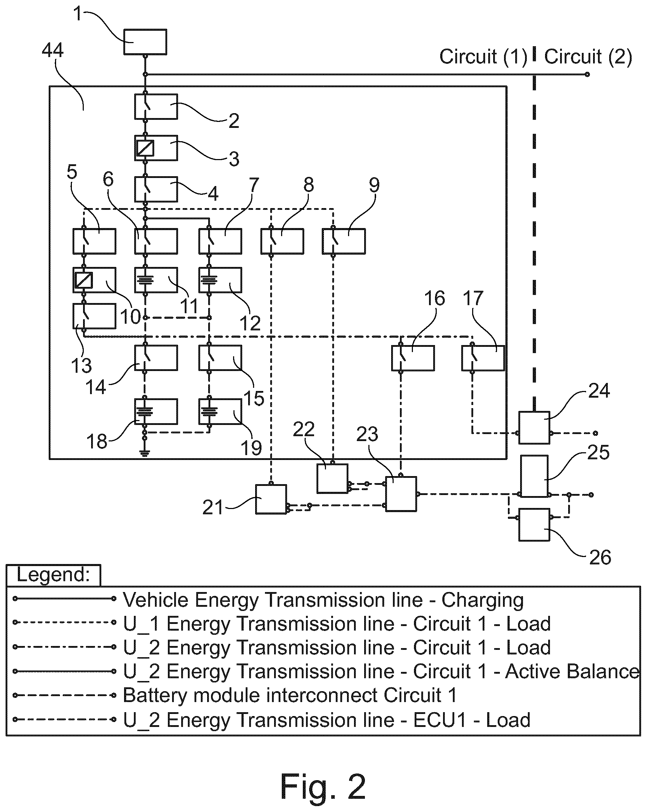

**Fig. 2** shows a schematic view of a redundant power supply for commercial vehicles.

The redundant power supply system of circuit (1) is composed of the following main components: Two distinct power supply paths supplied from vehicle's board network 1. The first power supply path consists of two energy storage modules connected in series. Each provides a U₂ voltage [battery module 11 and battery module 18] which can be separated by a smart safety switch 14 and also separated from vehicle's board network 1 by a smart safety switch 6. Similarly, the second path consists of an energy storage device 12 segregated from the energy storage device 19 by a smart safety switch 15 and can be decoupled from vehicle's board network 1 by a smart safety switch 7.

The first and second power supply paths of the system are connected to a vehicle's board network 1 through a direct-current-to-direct-current (DCDC) converter 3. The DCDC converter 3 operates to provide power conversion to voltage U₁ [V] to meet the requirements of the batteries. The DCDC converter 3 can be electrically decoupled from circuit (2) through smart safety switch 2 to fulfil the safety requirements in case of failure of the DCDC converter itself. Similarly, the DCDC converter 3 can be decoupled also from the rest of the rPMS system of circuit (1) through a smart safety switch 4 in case of malfunction.

The energy storage device configuration proposed by the architecture ensures that in case of failure in any of the energy storage device, an alternative independent power supply path can still ensure to supply the required U₁ voltage to some of the wheel brake actuators. With this reduced secondary braking performance power, the energy storage device modules 12 and 19 in the second power path can have lower capacity for the backup purposes. This redundancy ensures the power supply to the front left and right wheel brake actuators 21, 22 through the smart fuses 8 and 9, respectively.

Additionally, a DCDC converter 10 performs a charge balancing between the upper energy storage modules (modules 11, 12) and the lower ones (modules 18, 19) ensuring a coherent operation. The DCDC converter 10 can be decoupled through smart safety switches 5 and 13.

The rPMS system ensures that a redundant hand control unit (RHCU) 24 can be supplied by U₂ voltage from the energy storage modules through smart fuse 17 which is configured to decouple RHCU from the rPMS in case of failure.

The rPMS system ensures that the brake control ECU 23 can be supplied by one of the energy storage modules, even in case of malfunction of one of the storage modules, through the smart fuse 16, the brake control ECU, as well as RFBS 25 and redundant trailer control module RTCM 26 if available.

Circuit (2) has a similar structure and components as circuit (1), see Fig. 2.

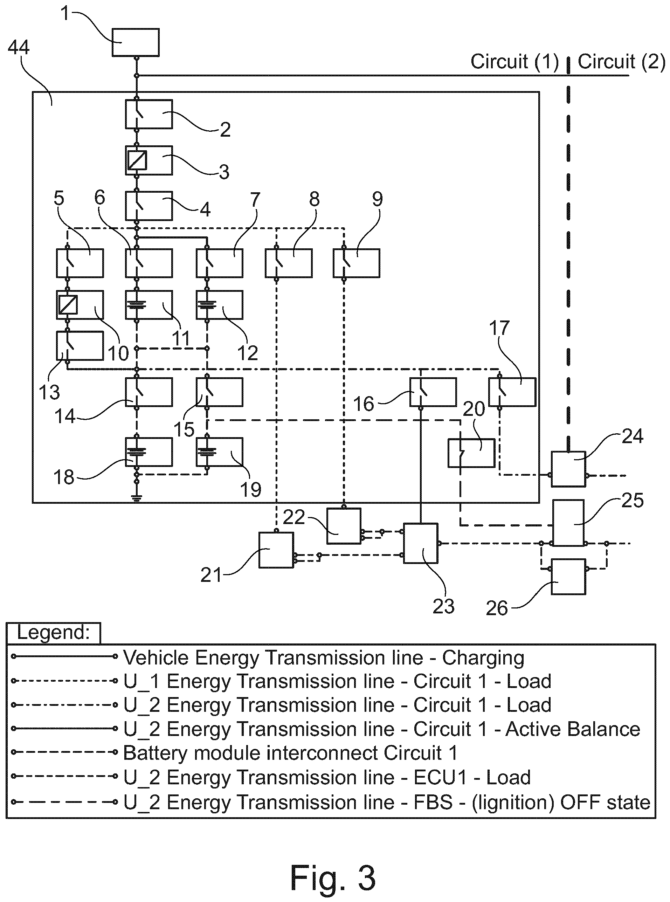

**Fig. 3** shows a schematic view of a redundant power supply system with integrated SF-NC for a redundant foot brake sensor (RFBS).

The layout in Fig.3. includes an additional normally closed smart fuse SF-NC 20. The SF-NC 20 is used to provide power to the redundant foot brake sensor 25 when the vehicle is in an (ignition) OFF state, and the braking system is deactivated, so that a brake pedal movement can trigger a braking event even in the OFF state. When the vehicle is in (ignition) ON state, and the rPMS is in operational state, then the SF-NC (20) is in open state and redundant foot brake sensor 25 can be supplied by the electronic control unit of brake control 23 directly.

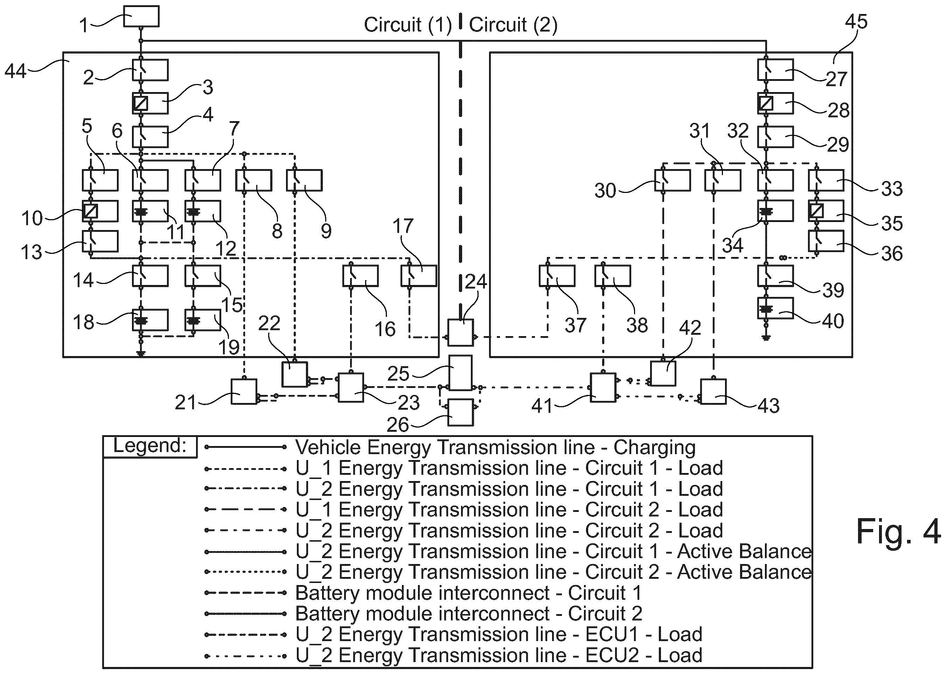

**Fig. 4** shows a schematic view of a redundant power supply system with circuit (2) containing one power supply path.

The layout in Fig.4 includes a special configuration within circuit (2), which comprises a singular power path with two energy storage devices connected in series. This setup ensures that, in the event of failure in circuit (2), in either the rear wheel brake actuators 42, 43 or in rPMS 45, the front wheel brake actuators 21 and 22 will maintain the required braking performance.

### LIST OF REFERENCE SIGNS

- 1: vehicle board network
- 2: smart safety switch
- 3: DCDC converter
- 4: smart safety switch
- 5: smart safety switch
- 6: smart safety switch
- 7: smart safety switch
- 8: smart fuse
- 9: smart fuse 10 DCDC converter
- 11: upper energy storage device module
- 12: upper energy storage device module
- 13: smart safety switch
- 14: smart safety switch
- 15: smart safety switch
- 16: smart fuse
- 17: smart fuse
- 18: lower energy storage device module
- 19: lower energy storage device module
- 20: normally closed smart fuse SF-NC
- 21: left wheel brake actuator
- 22: right wheel brake actuator
- 23: ECU
- 24: redundant hand control unit (RHCU)
- 25: redundant foot brake sensor
- 26: redundant Trailer Control Module

- 101: board network
- 102: redundant power management system rPMS
- 103: redundant power management system rPMS
- 104: wheelend brake actuator
- 105: wheel end brake actuator
- 106: electronic control unit ECU
- 107: hand control unit HCU
- 108: redundant foot brake sensor rFBS
- 109: redundant trailer control module rTCM
- 110: second circuit's ECU
- 111: wheel end brake actuator
- 112: wheelend brake actuator

## Claims

1. Redundant power supply system (rPMS) for an electromechanical brake system for a vehicle **characterized in that** the redundant power supply system comprises at least two power supply paths supplied from a vehicle's board network, where each power supply path contains at least two energy storage device modules (11, 18; 12, 19) interconnected in a H-schematic 2x2 energy storage devices arrangement.

2. Redundant power supply system (rPMS) according to claim 1 **characterized in that** the two energy storage device modules (11, 18; 12, 19) of each power supply path can be decoupled by safety switches (6, 14; 7, 15), preferably smart safety switches.

3. Redundant power supply system (rPMS) according to claim 1 **characterized in that** the 2x2 energy storage device modules (11, 18; 12, 19) are configured to have different capacities.

4. Redundant power supply system (rPMS) according to claim 1 **characterized by** smart fuses (8, 9) which are provided in the lines from the rPMS towards wheel brake actuators (21, 22).

5. Redundant power supply system (rPMS) according to any of claims 1 to 4 **characterized in that** the system further comprises a direct-current-to-direct-current (DCDC) converter (3) to provide power conversion required by the energy storage device modules (11, 18; 12, 19), and preferably safety switches to protect the at least two power supply paths of at least one or any further circuits.

6. Redundant power supply system (rPMS) according to any of claims 1 to 5 **characterized in that** the system further comprises a direct-current-to-direct-current DCDC converter (10) which is configured to perform a charge balancing between upper (11, 12) and lower (18, 19) energy storage device modules connected in series in each power paths, and **in that** preferably safety switches (5, 13) are provided configured to disconnect said DCDC converter (10) in case of failure.

7. Redundant power supply system (rPMS) according to any of claims 1 to 6 **characterized in that** at least one of the energy storage device modules (18, 19) is configured to supply a brake control ECU (23), preferably through a smart fuse (16), so that the brake control ECU controls at least one of wheel brakes, and preferably the redundant power supply system (rPMS) is configured to supply at least one of a redundant hand control unit (RHCU) (24), a redundant foot brake sensor (RFBS) (25), and a redundant trailer control module (RTCM) (26).

8. Redundant power supply system (rPMS) according to any of claims 1 to 7 **characterized in that** a number of smart safety switches is provided and configured to decouple the DCDC converters (3, 10), said energy storage device modules (11, 12; 18, 19), preferably upper energy storage device modules (11, 12), and lower energy storage device modules (18, 19), from vehicle's board network and from one another in case of failure.

9. Redundant power supply system (rPMS) according to any of claims 1 to 8 **characterized in that** the redundant power supply system comprises a normally closed switch (20) to ensure power for a Foot Brake Sensor (25) in an (ignition) OFF state.

10. Redundant power supply system (rPMS), comprising a configuration in a second or any further circuit, which comprises a singular power path, which is configured that where in the event of failure in said circuit, the required braking performance is ensured by the front wheel brake actuators (21, 22).

11. Commercial vehicle comprising a redundant power supply system (rPMS) according to any of the previous claims.
